# EUROPEAN PATENT APPLICATION

(11) **EP 4 723 518 A1**
(43) Date of publication of application: **08.04.2026**
(21) Application number: 24825275.1
(22) Date of filing: 19.06.2024
(51) Int. Cl.: H04J 3/16

(54) **SIGNAL TRANSMISSION METHOD AND APPARATUS, AND RELATED DEVICES AND STORAGE MEDIUM**

(30) Priority: 19.06.2023 CN 202310730292
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LI, Yunbo, Beijing 100053 (CN); ZHANG, Dechao, Beijing 100053 (CN); LIU, Sheng, Beijing 100053 (CN); CAO, Shan, Beijing 100053 (CN); WANG, Dong, Beijing 100053 (CN); ZHAO, Yang, Beijing 100053 (CN); LI, Han, Beijing 100053 (CN)
(74) Representative: Novagraaf Technologies
(86) International application number: PCT/CN2024/100211
(87) International publication number: WO 2024/260387

(57) **Abstract**

Disclosed in the present application are a signal transmission method and apparatus, and a first device, a second device and a storage medium. The method comprises: obtaining a first frame corresponding to a first signal, wherein the first signal comprises a synchronous transport module (STM)-N signal or an E1 signal, and the first frame comprises an administration unit (AU) frame or a tributary unit group (TUG) frame or a tributary unit (TU) frame; mapping the first frame to a payload area of a second frame, wherein the second frame comprises a fine-grain optical data unit (fgODU) frame; and sending the second frame.

## Description

### CROSS-REFERENCE TO RELATED APPLICATION

This application is based on and claims priority to Chinese Patent Application No. 202310730292.3, filed on June 19, 2023, the contents of which are hereby incorporated by reference in its entirety.

### TECHNICAL FIELD

The present disclosure relates to the technical field of optical transport networks (OTN), and more particularly to methods and apparatuses for signal transmission, related devices, and a storage medium.

### BACKGROUND

At present, OTN is widely used in backbone networks, metro core networks, metro aggregation networks and other networks, and is being further expanded to edge networks, such as access networks. As OTN expands further to the edge of the network, OTN is faced with more and more service bearer requirements with different rates; that is, one of the current features of OTN is the increase in the number of services, and another feature is the diversification of rates. In particular, dedicated line services with bandwidths less than 1 Gigabit (G) will appear in large numbers, such as high-value time division multiplexing (TDM) services (also known as synchronous digital hierarchy (SDH) services) carried by a SDH terminal device. Here, the SDH services may include synchronous transport module (STM)-N services, E1 services, and the like. The STM-N services may include STM-1, STM-4, STM-16, STM-64, and the like.

However, there is no effective solution for how to realize efficient transmission of SDH service data in OTN.

### SUMMARY

In order to solve related technical problems, embodiments of the present disclosure provide methods and apparatuses for signal transmission, related devices, and a storage medium.

The technical solution of the embodiment of the present disclosure is realized as follows.

An embodiment of the present disclosure provides a method for signal transmission, which is applied to a first device, and includes the following operations:
a first frame corresponding to a first signal is obtained, where the first signal includes an STM-N signal or an E1 signal, and the first frame includes an administration unit (AU) frame or a tributary unit group (TUG) frame or a tributary unit (TU) frame;
the first frame is mapped to a payload area of a second frame, where the second frame includes a fine grain optical data unit (fgODU) frame; and
the second frame is transmitted.

In the above solution, when the first signal includes the STM-N signal, the first frame includes an AU-4 frame, a TUG-3 frame, or a TU-12 frame. The operation of obtaining the first frame corresponding to the first signal includes that: the first frame is extracted from the first signal.

In the above solution, when the first frame is mapped to the payload area of the second frame, one first frame corresponds to one second frame, and/or a plurality of first frames correspond to one second frame.

In the above solution, when the first signal includes the E1 signal, the first frame includes a TU-12 frame. The operation of obtaining the first frame corresponding to the first signal includes that:
the first signal is mapped to a third frame, where the third frame includes a virtual container (VC)-12 frame; and
the third frame is mapped to the first frame.

In the above solution, the second frame includes a first pointer, and the first pointer indicates a starting position of the first frame in a payload area of the second frame.

In the above solution, the first pointer is provided in a first overhead area and/or a second overhead area of the second frame.

In the above solution, when mapping the first frame to the payload area of the second frame, the method further includes that:
first information is added into the first frame, and a first frame carrying the first information is mapped to the payload area of the second frame, where the first information indicates a starting position of the first frame in the payload area of the second frame.

An embodiment of the present disclosure also provides a method for signal transmission, which is applied to a second device, and includes that:
a second frame is received, where the second frame includes a fgODU frame;
a first frame is demapped from a payload area of the second frame, where the first frame includes an AU frame or a TUG frame or a TU frame; and
a first signal corresponding to the first frame is obtained, where the first signal includes an STM-N signal or an E1 signal.

In the above solution, when the first signal includes the STM-N signal, the first frame includes an AU-4 frame, a TUG-3 frame, or a TU-12 frame. The operation of obtaining the first signal corresponding to the first frame includes that:
a fourth frame is extracted from the first frame, and clock synchronization is performed to obtain a new first frame, where the fourth frame includes a VC-n frame; and
a first signal corresponding to the new first frame is obtained.

In the above solution, when the first frame is demapped from the payload area of the second frame, one second frame corresponds to one first frame, and/or one second frame corresponds to a plurality of first frames.

In the above solution, when the first signal includes the E1 signal, the first frame includes a TU-12 frame. The operation of obtaining the first signal corresponding to the first frame includes that:
a third frame is demapped from the first frame, where the third frame includes a VC-12 frame; and
the first signal is demapped from the third frame.

In the above solution, the second frame includes a first pointer, and the first pointer indicates a starting position of the first frame in a payload area of the second frame.

In the above solution, the first pointer is provided in a first overhead area and/or a second overhead area of the second frame.

In the above solution, when the first frame is demapped from the payload area of the second frame, the method further includes:
a starting position of the first frame in the payload area of the second frame is determined using the first information carried in the first frame.

An embodiment of the present disclosure further provides an apparatus for signal transmission, which is provided on a first device and includes a first processing unit, a second processing unit, and a first transmission unit.

The first processing unit is configured to obtain a first frame corresponding to a first signal, where the first signal includes an STM-N signal or an E1 signal, the first frame includes an AU frame or a TUG frame or a TU frame.

The second processing unit is configured to map the first frame to a payload area of a second frame, where the second frame includes a fgODU frame.

The first transmission unit is configured to transmit the second frame.

An embodiment of the present disclosure further provides an apparatus for signal transmission, which is provided on a second device, and includes a first receiving unit, a third processing unit, and a fourth processing unit.

The first receiving unit is configured to receive a second frame, where the second frame includes an fgODU frame.

The third processing unit is configured to demap a first frame from a payload area of the second frame, where the first frame includes an AU frame or a TUG frame or a TU frame.

The fourth processing unit is configured to obtain a first signal corresponding to the first frame, where the first signal includes an STM-N signal or an E1 signal.

An embodiment of the present disclosure further provides a first device, including: a first communication interface and a first processor.

The first processor is configured to:
obtain a first frame corresponding to a first signal, where the first signal includes an STM-N signal or an E1 signal, and the first frame includes an AU frame or a TUG frame or a TU frame;
map the first frame to a payload area of a second frame, where the second frame includes a fgODU frame; and
transmit the second frame through the first communication interface.

An embodiment of the present disclosure further provides a second device, including: a second communication interface and a second processor.

The second processor is configured to:
receive a second frame through the second communication interface, where the second frame includes a fgODU frame;
demap a first frame from a payload area of the second frame, where the first frame includes an AU frame or a TUG frame or a TU frame; and
obtain a first signal corresponding to the first frame, where the first signal includes an STM-N signal or an E1 signal.

An embodiment of the present disclosure further provides a first device, including a first processor and a first memory configured to store a computer program executable by the first processor.

The first processor is configured to execute the steps of any of the methods on the first device side when running the computer program.

An embodiment of the present disclosure further provides a second device including a second processor and a second memory configured to store a computer program executable by the second processor.

The second processor is configured to execute the steps of any of the methods on the second device side when running the computer program.

An embodiment of the present disclosure further provides a storage medium storing a computer program, and when the computer program is executed by a processor, the computer program implements the steps of any one of the above-described methods on the first device side or the steps of any one of the above-described methods on the second device side.

In the methods and apparatuses for signal transmission, related devices, and a storage medium according to the embodiments of the present disclosure, the first device obtains a first frame corresponding to a first signal, where the first signal includes an STM-N signal or an E1 signal, and the first frame includes an AU frame, a TUG frame, or a TU frame; maps the first frame to a payload area of a second frame, where the second frame includes a fgODU frame; transmits the second frame. The second device receives the second frame, demaps the first frame from the payload area of the second frame, and obtains a first signal corresponding to the first frame. According to the embodiments of the present disclosure, the fgODU frame (that is, the second frame) transmitted between the first device and the second device is obtained by mapping the AU/TUG/TU frame (that is, the first frame) corresponding to the STM-N/E1 signal (that is, the first signal) to the payload area of the fgODU frame, so that processing of fine grains (that is, the AU/TUG/TU frame) can be realized in the mapping process from the SDH service data (that is, the STM-N/E1 signal) to the fgODU frame, and efficient transmission of the SDH service data in the OTN can be realized based on the fgODU frame. Furthermore, for the STM-N signal, the extraction (which can also be understood as stripping) of the SDH service data by the mapping end (that is, the first device) can be limited only to a shallow layer (that is, AU/TUG/TU frame), and it is not necessary to extract to a deep layer (that is, VC-n frame) before mapping, thereby simplifying the data processing process of the mapping end, that is, simplifying the stripping process of the SDH service data by the mapping end, thereby reducing the device complexity of the mapping end, and further improving the transmission efficiency of the SDH service data in the OTN.

### BRIEF DESCRIPTION OF THE DRAWINGS

FIG. 1 is a schematic diagram of a service data mapping procedure based on an fgODU frame in the related art.
FIG. 2 is a flowchart of a method for signal transmission according to an embodiment of the present disclosure.
FIG. 3 is a schematic diagram of a processing flow of STM-N service data and E1 service data according to an embodiment of the present disclosure.
FIG. 4 is a schematic diagram of implementing SDH service framing by setting a pointer in an overhead area according to an embodiment of the present disclosure.
FIG. 5 is another schematic diagram of implementing SDH service framing by setting a pointer in an overhead area according to an embodiment of the present disclosure.
FIG. 6 is a schematic diagram of implementing SDH service framing through a frame header according to an embodiment of the present disclosure.
FIG. 7 is a flowchart of another method for signal transmission according to an embodiment of the present disclosure.
FIG. 8 is a schematic diagram of clock synchronization according to an embodiment of the present disclosure.
FIG. 9 is a schematic diagram of another clock synchronization according to an embodiment of the present disclosure.
FIG. 10 is a schematic structural diagram of an apparatus for signal transmission according to an embodiment of the present disclosure.
FIG. 11 is a schematic structural diagram of another apparatus for signal transmission according to an embodiment of the present disclosure.
FIG. 12 is a schematic structural diagram of a first device according to an embodiment of the present disclosure.
FIG. 13 is a schematic structural diagram of a second device according to an embodiment of the present disclosure.
FIG. 14 is a schematic structural diagram of a system for signal transmission according to an embodiment of the present disclosure.

### DETAILED DESCRIPTION

The present disclosure will be described in further detail below with reference to the accompanying drawings and embodiments.

In the related art, a constant bit rate (CBR) frame can be used to perform simple transparent transmission of a service having a bandwidth of less than 1 G, such as a SDH service. However, each service signal (such as an STM-N signal, etc.) may contain multiple fine grains (such as AU-4 frames, TUG-3 frames, TU-12 frames, etc.), and each fine grain may go to a different direction, that is, each fine grain may correspond to a different destination address. If the CBR frame is used to transmit SDH service data, the processing of the fine grains cannot be realized. Moreover, if an existing 1.25 G fine-grained pipeline is used to carry services with a bandwidth less than 1 G such as SDH services, there will be an obvious problem of bandwidth waste.

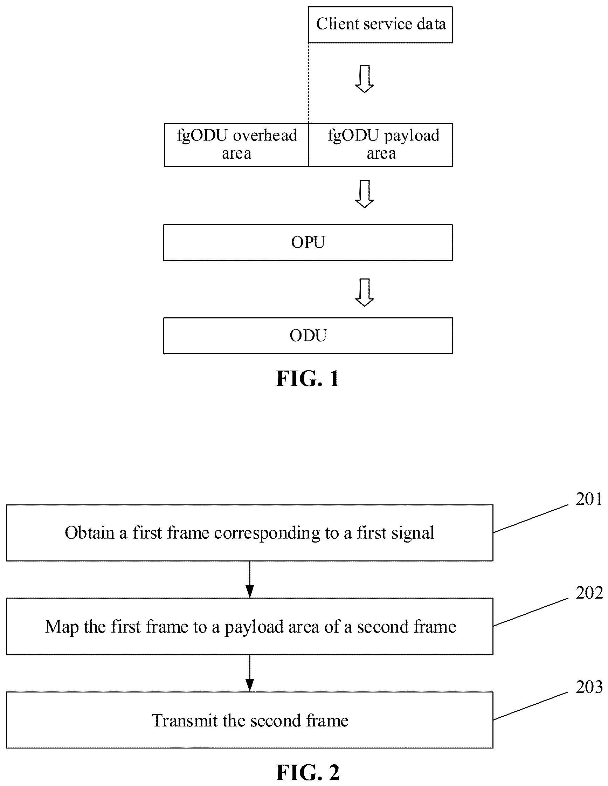

In the related art, a fine grain optical transport network (fgOTN) transmission scheme for a service with a transmission rate below 1 G is also introduced, which carries service data through a specific frame (i.e., an fgODU frame). The fgODU frame includes an overhead area and a payload area, and is a block structure of 4 * 3824. In addition, in order to strengthen the management of service data, more overhead is added to the fgODU frame. Specifically, on the basis of the original overhead areas in columns 1 to 16, columns 1905 to 1920 are added as overhead areas. As shown in FIG. 1, when implementing the fgOTN transmission solution, data of a fine-grained client service (that is, a service with a transmission rate lower than 1 G) is first mapped to an fgODU frame, the fgODU frame is mapped/multiplexed an optical payload unit (OPU) frame, and then the OPU frame is multiplexed to an optical data unit (ODU) frame for aggregation transmission. However, the above-described fgOTN transmission scheme does not support the processing of fine-grained data (such as AU-4, TUG-3, TU-12, etc.).

As can be seen from the above description, in the related art, during transmitting SDH service data in an OTN (which may specifically include fgOTN), since processing of a fine grain (such as an AU-4 frame, a TUG-3 frame, a TU-12 frame, etc.) cannot be realized, efficient transmission of SDH service data in the OTN cannot be realized.

Based on this, in various embodiments of the present disclosure, on the basis of the above-described fgOTN transmission scheme, a new mapping format of SDH service data is proposed to meet the efficient bearing requirements of a specific application scenario or a specific service, for example, to support the efficient transmission of SDH service data. Specifically, the fgODU frame transmitted between the mapping end and the demapping end is obtained by mapping an AU/TUG/TU frame corresponding to the STM-N/E1 signal to the payload area of the fgODU frame. In this way, processing of fine grains (that is, the AU/TUG/TU frame) can be realized in the mapping process from the SDH service data (that is, the STM-N/E1 signal) to the fgODU frame, and the SDH service data can be efficiently transmitted in the OTN based on the fgODU frame. Furthermore, for the STM-N signal, the extraction (which can also be understood as stripping) of the SDH service data by the mapping end can only be limited to a shallow layer (that is, AU/TUG/TU frame), and it is not necessary to extract to a deep grain (that is, VC-n frame) before mapping, thereby simplifying the data processing process of the mapping end, that is, simplifying the stripping process of the SDH service data by the mapping end, thereby reducing the equipment complexity of the mapping end, and further improving the transmission efficiency of the SDH service data in the OTN.

An embodiment of the present disclosure provides a method for signal transmission, which is applied to a first device, and as shown in FIG. 2, the method includes the following operations.

At 201: a first frame corresponding to a first signal is obtained. The first signal includes an STM-N signal or an E1 signal. The first frame includes an AU frame or a TUG frame or a TU frame.

At 202: the first frame is mapped to a payload area of a second frame, where the second frame includes an fgODU frame.

At 203: the second frame is transmitted.

In practical application, the first device may also be referred to as a mapping end, a source, a source node, a transmitter end, etc. In the embodiment of the present disclosure, the name of the first device is not limited as long as its function is realized.

In practical application, the first device may first receive the first signal sent by the client, and then execute the operation 201. The client may also be referred to as a client device, an SDH client, a client SDH device, a VC-n client, or the like, and the name of the client is not limited in the embodiment of the present disclosure, as long as the function of the client is implemented.

In actual application, the first device may specifically transmit the second frame to the second device. After receiving the second frame, the second device may demap the first frame from the payload area of the second frame, obtain the first signal corresponding to the first frame, and then send the first signal to a target client (that is, another client except the client that sends the first signal to the first device) according to a destination address corresponding to the first frame. Here, the second device may also be referred to as a demapping end, a sink, a sink node, a receiving end, or the like, and the name of the second device is not limited in the embodiment of the present disclosure, as long as the function thereof is implemented.

It should be noted that when the first device transmits the second frame to the second device, it can be understood that a message transmitted by the first device to the second device only includes the second frame. Alternatively, it may be understood that the message sent by the first device to the second device may include the second frame or other information other than the second frame, and for example, the first device may send an optical transform unit (OTU) frame to the second device, the OTU frame includes an ODU frame, the ODU frame includes an OPU frame, and the OPU frame includes an fgODU frame (that is, the second frame).

In practical application, signal transmission in the embodiment of the present disclosure can also be understood as transmission of service data/service frame, and specifically refers to transmission of fgODU frame in an OTN (which may specifically include fgOTN). An OTN is usually formed by a plurality of OTN devices connected by optical fibers, so both the first device and the second device may be OTN devices, specifically fgOTN devices.

Here, it should be noted that in technical field of the OTNs, the meanings of a frame, a signal, and an interface are the same. Therefore, in various embodiments of the present disclosure, frames, signals, and interfaces in various names may be replaced. For example, the first frame may also be referred to as an AU/TUG/TU signal; for another example, the first signal may be referred to as an STM-N/E1 interface, an STM-N/E1 client, an STM-N/E1 client signal, or the like, where the client represents an "interface."

In addition, it should be noted that in various embodiments of the present disclosure, the content included in the signal/frame can be understood as the content included in the type of the signal/frame. For example, the first signal includes an STM-N signal or an E1 signal can be understood as the type of the first signal includes an STM-N signal or an E1 signal. For another example, the first frame includes an AU frame, a TUG frame, or a TU frame, and it may be understood that the type of the first frame includes an AU frame, a TUG frame, or a TU frame.

In practical application, for the E1 signal, the first device may first map the E1 signal to a VC-12 frame, map the VC-12 frame to a TU-12 frame, and then map the TU-12 frame to the fgODU frame.

Based on this, in an embodiment, when the first signal includes an E1 signal, the first frame may include a TU-12 frame. The operation of obtaining the first frame corresponding to the first signal may include the following actions:
the first signal is mapped to a third frame, where the third frame includes a VC-12 frame; and
the third frame is mapped to the first frame.

In practical applications, it can be seen from the above description that the STM-N signal may contain multiple fine grains, such as AU-4 frames, TUG-3 frames, TU-12 frames, etc. Thus, when the first signal includes an STM-N signal, the first frame may include an AU-4 frame or a TUG-3 frame or a TU-12 frame. At this time, the first device may extract an AU-4 frame, a TUG-3 frame, or a TU-12 frame from the STM-N signal.

Based on this, in an embodiment, when the first signal includes an STM-N signal, the first frame may include an AU-4 frame, a TUG-3 frame, or a TU-12 frame, the operation of obtaining the first frame corresponding to the first signal includes that: the first frame is extracted from the first signal.

In practical application, it can be seen from the above description that each fine grain (such as an AU-4 frame, a TUG-3 frame, a TU-12 frame, or the like, that is, the first frame) included in the STM-N signal may correspond to a different destination address. Therefore, during mapping the first frame to the payload area of the second frame, it is necessary to map first frames having the same destination address to the same second frame, and map first frames having different destination addresses to different second frames respectively. In other words, when the first frame is mapped to the payload area of the second frame, one first frame corresponds to one second frame, and/or a plurality of first frames correspond to one second frame (the destination addresses of the plurality of first frames are the same).

In practical application, different STM-N signals may contain different types of fine grains, i.e., types of first frames extracted from different types of first signals are different. Among them, for the STM-1 signal, when the client encapsulates the service data, it can first encapsulate the service data into a VC-4 frame, and add a management unit pointer (AU-PTR) to the VC-4 frame to form an AU-4 frame, where the AU-PTR indicates the position of each VC-4 payload in the STM-N signal. After that, the client can add a regeneration section overhead (RSOH) and a multiplex section overhead (MSOH) to the AU-4 frame to form an STM-1 frame structure. If there are multiple consecutive VC-4 frames, they can be cascaded together to form VC-4-4c to obtain an STM-4 frame structure; or to construct VC-4-16c to obtain an STM-16 frame structure; or to construct VC-4-64c to obtain an STM-64 frame structure. After receiving the STM-N signal, the first device terminates the RSOH and the MSOH first, and then separates/strips out the AU-4.

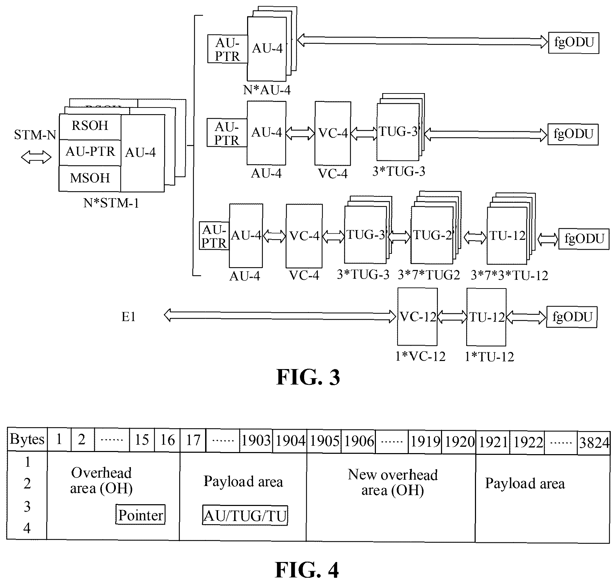

Specifically, in practical application, as shown in FIG. 3, after receiving an STM-N signal (i.e., the first signal), the first device may strip out an AU-4 frame (i.e., the first frame) from the STM-N signal, and then map the AU-4 frame into an fgODU frame (i.e., the second frame). In a case where a plurality of AU-4 frames are separated from one STM-N signal, a plurality of AU-4 frames having the same destination address may be sequentially arranged in a frame header alignment manner, and then mapped to one fgODU frame in an interleaved manner, and/or a plurality of AU-4 frames having different destination addresses may be mapped to different fgODU frames, respectively.

In practical application, as shown in FIG. 3, after receiving the STM-N signal (i.e., the first signal), the first device may strip out an AU-4 frame from the STM-N signal, restore the AU-4 frame to a VC-4 grain (also referred to as a VC-4 frame or a VC-4 signal), further decompose one VC-4 frame into three TUG-3 frames (that is, the first frame). Alternatively, a plurality of TUG-3 frames of a plurality of AU-4 frames can be extracted from the STM-N signal. For the obtained plurality of TUG-3 frames, a plurality of TUG-3 frames having the same destination address may be sequentially arranged in a frame header alignment manner, and then mapped to one fgODU frame in an interleaved manner, and/or a plurality of TUG-3 frames having different destination addresses may be mapped to different fgODU frames, respectively.

In practical application, as shown in FIG. 3, after receiving the STM-N signal (i.e., the first signal), the first device may strip out an AU-4 frame from the STM-N signal and restore it to a VC-4 grain (also referred to as a VC-4 frame or a VC-4 signal), further decompose one VC-4 frame into three TUG-3 frames, further restore one TUG-3 frame into 3 * 7 TUG-2 frames, and then decompose one TUG-2 frame into three TU-12 frames (i.e., the first frame). Alternatively, a plurality of TU-12 frames of a plurality of AU-4 frames can be extracted from the STM-N signal. For the obtained plurality of TU-12 frames, a plurality of TU-12 frames having the same destination address may be sequentially arranged in a frame header alignment manner, and then mapped to one fgODU frame in an interleaved manner, and/or a plurality of TU-12 frames having different destination addresses may be mapped to different fgODU frames, respectively.

In an embodiment, the second frame may include a first pointer indicating a starting position of the first frame in the payload area of the second frame.

In practical application, the first pointer may be expressed as a PTR (PoinTeR), and the starting position of the first frame in the payload area of the second frame may also be understood as a position of an initial byte (such as H1/V1 byte (B)) of service data corresponding to the AU-4/TU-3/TU-12 frame.

In practical application, the first pointer may be set in the overhead area of the second frame, and at this time, the first pointer may also be referred to as an out-of-band indication overhead.

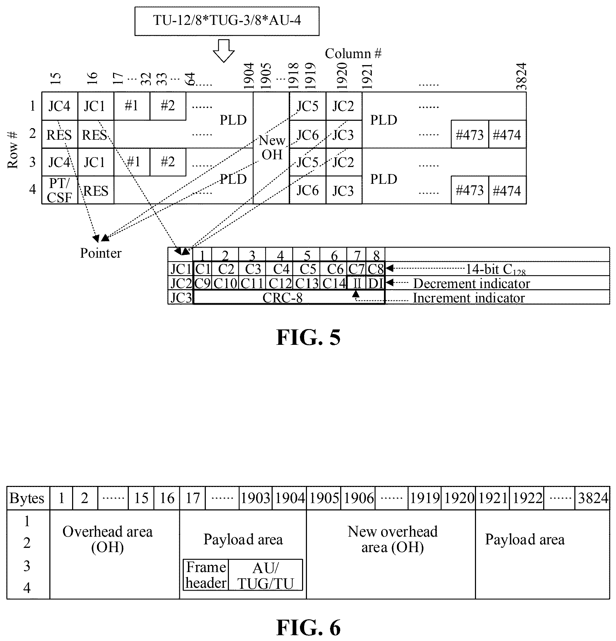

In practical application, in order to quickly realize the framing of services and quickly monitor the fault alarm to quickly realize the protection switching, the fault detection time can be shortened by adding additional overhead, that is, an fgODU frame structure including an extended overhead area can be adopted to ensure rapid switching of low-speed services in the state of fault occurrence. In other words, the second frame may include two overhead areas: a first overhead area and a second overhead area. One of the first overhead area and the second overhead area is the extended overhead area of the second frame. Accordingly, the first pointer may be disposed in the first overhead area and/or the second overhead area. Exemplarily, as shown in FIG. 4, the first pointer may be disposed in an overhead area (i.e., the first overhead area or the second overhead area). Alternatively, as shown in FIG. 5, the position of the first pointer may be set in JC4, JC5, and JC6 bytes of the overhead area of the fgODU frame when carrying the SDH service. When the service data is mapped (i.e., encapsulated) with a length of 16 bytes (B), a length of 9 bits may be reserved as the length of the first pointer. When the service data is mapped with a length of 1 B, a length of 12 bits may be reserved as the length of the first pointer. In addition, in order to ensure the accuracy of the first pointer during transmission, a cyclic redundancy check (CRC) may be set to perform error correction verification on the first pointer itself.

In an embodiment, when mapping the first frame to the payload area of the second frame, the method may further include the following actions.

First information is added into the first frame, and a first frame carrying the first information is mapped to the payload area of the second frame. The first information indicates the starting position of the first frame in the payload area of the second frame.

In practical application, the first information may also be referred to as a frame header, an in-band indication overhead, or the like, and the name of the first information is not limited in the embodiment of the present disclosure, as long as the function of the first information is implemented. In addition, it can be understood that the first information is different from a frame alignment signal (FAS) of the second frame.

In practical application, the specific size and implementation mode of the first information can be set according to requirements. For example, the first information can be obtained by inverting the FAS of the second frame (that is, inverting 1 to 0 and inverting 0 to 1). At this time, the first information can also be referred to as a reverse frame alignment signal (RFAS), and the first information can be 16 B. Specifically, as shown in FIG. 6, in order to distinguish from the FAS of the header of the fgODU frame (i.e., the second frame) itself, the RFAS of the header of the AU-4/TUG-3/TU-12 frame (i.e., the first frame) may identify the starting position of the corresponding SDH service data (i.e., the SDH service data included in the corresponding AU-4/TUG-3/TU-12 frame) by inverting the FAS, that is, the RFAS may be directly placed before the AU-4/TUG-3/TU-12 frame to characterize the starting position of the corresponding service data, and the second device may use only this specific frame header (i.e., RFAS) for framing.

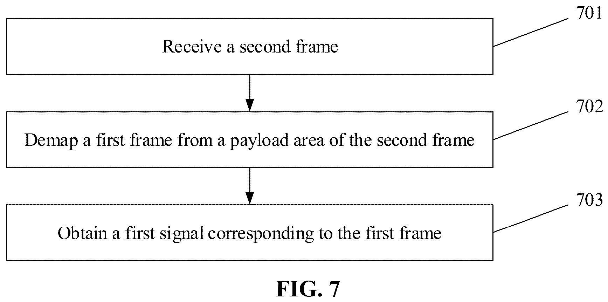

Accordingly, an embodiment of the present disclosure further provides a signal transmission method, which is applied to a second device, and as shown in FIG. 7, the method includes the following operations.

At 701: a second frame is received, where the second frame includes an fgODU frame.

At 702: a first frame is demapped from a payload area of the second frame, where the first frame includes an AU frame or a TUG frame or a TU frame.

At 703: a first signal corresponding to the first frame is obtained, where the first signal includes an STM-N signal or an El signal.

In practical application, the second device may transmit the first signal after obtaining the first signal. Specifically, the second device may transmit the first signal to a target client (i.e., another client other than a client that sends the first signal to the first device) according to a destination address corresponding to the first frame.

In an embodiment, where the first signal includes an STM-N signal, the first frame may include an AU-4 frame or a TUG-3 frame or a TU-12 frame. The operation of obtaining the first signal corresponding to the first frame may include the following actions.

A fourth frame is extracted from the first frame, and clock synchronization is performed to obtain a new first frame, where the fourth frame includes a VC-n frame.

A first signal corresponding to the new first frame is obtained.

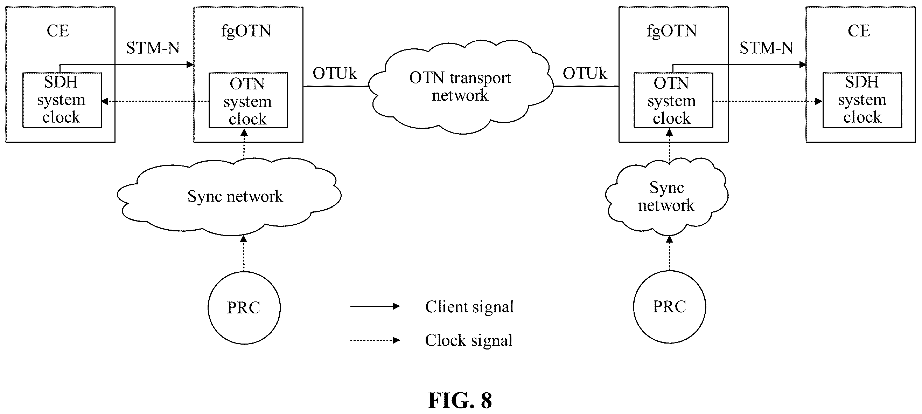

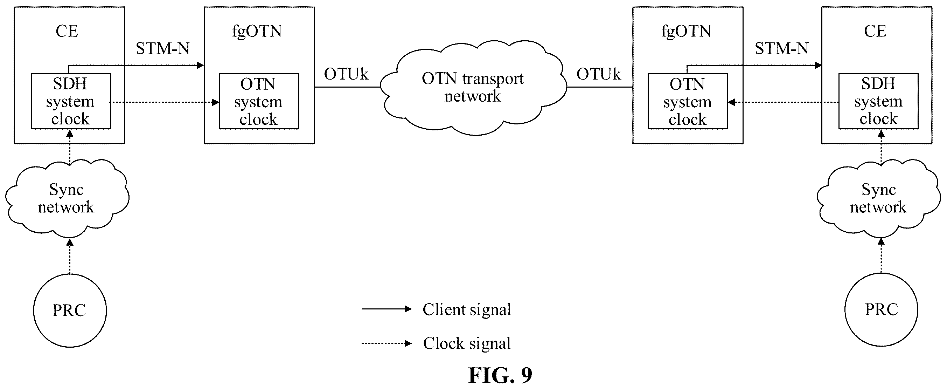

In practical applications, the clock synchronization can also be referred to as frequency synchronization or the like. In addition, a specific manner in which the second device performs clock synchronization may be set according to requirements. For example, as shown in FIG. 8, the second device may synchronize a frequency synchronization network of the fgOTN. Alternatively, as shown in FIG. 9, the second device may synchronize a frequency synchronization network of the client SDH device (i.e., the client). Specifically, after demapping the AU-4/TUG-3/TU-12 frame (i.e., the first frame) from the payload area of the fgODU frame (i.e., the second frame), the second device may further extract a VC-n signal (i.e., the fourth frame) from the AU-4/TUG-3/TU-12 frame and perform clock synchronization. The VC-n signal is mapped to a new AU-4/TUG-3/TU-12 frame (i.e., the new first frame) using a synchronous clock, and the new AU-4/TUG-3/TU-12 frame is encapsulated into an STM-N signal (i.e., the first signal corresponding to the new first frame is obtained) and transmitted to the client side.

In an embodiment, when the first signal includes an E1 signal, the first frame may include a TU-12 frame. The operation of obtaining the first signal corresponding to the first frame may include the following actions.

A third frame is demapped from the first frame, where the third frame includes a VC-12 frame; and
the first signal is demapped from the third frame.

In an embodiment, when demapping the first frame from the payload area of the second frame, the method may further include the following action.

A starting position of the first frame in a payload area of the second frame is determined using first information carried in the first frame.

In practical application, the first overhead area and/or the second overhead area of the second frame may include a first pointer indicating the starting position of the first frame in the payload area of the second frame, and the second device may also use the first pointer to determine the starting position of the first frame in the payload area of the second frame.

It should be noted that, in various embodiments of the present disclosure, a specific method of mapping may be set according to requirements, such as a general mapping procedure (GMP), and the like, and the embodiments of the present disclosure are not limited thereto.

In the signal transmission method according to the embodiment of the present disclosure, the first device obtains a first frame corresponding to a first signal, where the first signal includes an STM-N signal or an E1 signal, and the first frame includes an AU frame, a TUG frame, or a TU frame; maps the first frame to a payload area of a second frame, where the second frame includes an fgODU frame; and transmits the second frame. The second device receives the second frame, demaps the first frame from the payload area of the second frame, and obtains the first signal corresponding to the first frame. According to the embodiment of the present disclosure, the fgODU frame (i.e., the second frame) transmitted between the first device and the second device is obtained by mapping the AU/TUG/TU frame (i.e., the first frame) corresponding to the STM-N/E1 signal (i.e., the first signal) to the payload area of the fgODU frame, so that processing of fine grains (i.e., the AU/TUG/TU frame) can be realized in the mapping process from the SDH service data (i.e., the STM-N/E1 signal) to the fgODU frame, and efficient transmission of the SDH service data in the OTN can be realized based on the fgODU frame. Further, with respect to the STM-N signal, the extraction (which can also be understood as stripping) of the SDH service data by the mapping end (that is, the first device) can be limited only to the shallow layer (that is, the AU/TUG/TU frame), without needing to extract to the deep granular layer (that is, the VC-n frame) before mapping, thereby simplifying the data processing process of the mapping end, that is, simplifying the stripping process of the SDH service data by the mapping end, thereby reducing the device complexity of the mapping end, and further improving the transmission efficiency of the SDH service data in the OTN.

In addition, according to the embodiment of the present disclosure, the fgODU frame format includes an extended overhead area (that is, the first overhead area or the second overhead area) and a payload area. The starting position of the SDH service data in the payload is characterized by setting pointer positioning information (that is, the first pointer) in the overhead area (that is, the first overhead area and/or the second overhead area) or directly setting a frame header (that is, the first information) for the SDH service (that is, the frame corresponding to the SDH service data, that is, the first frame). The service data is placed (i.e., mapped) in the payload of the fgODU frame and transmitted, thereby enabling the transmission of the SDH service data in the OTN network. In other words, based on the fgODU frame structure, by introducing processing of SDH service data (that is, SDH service frame, that is, AU/TUG/TU frame), SDH service attributes are retained according to a preset processing mechanism (that is, the signal transmission method provided by the embodiment of the present disclosure), and operation management and maintenance (OAM) capability of the fgODU frame is enhanced by extending overhead, thereby realizing efficient transmission of SDH service data through the fgODU frame and meeting the bearer requirements of SDH service.

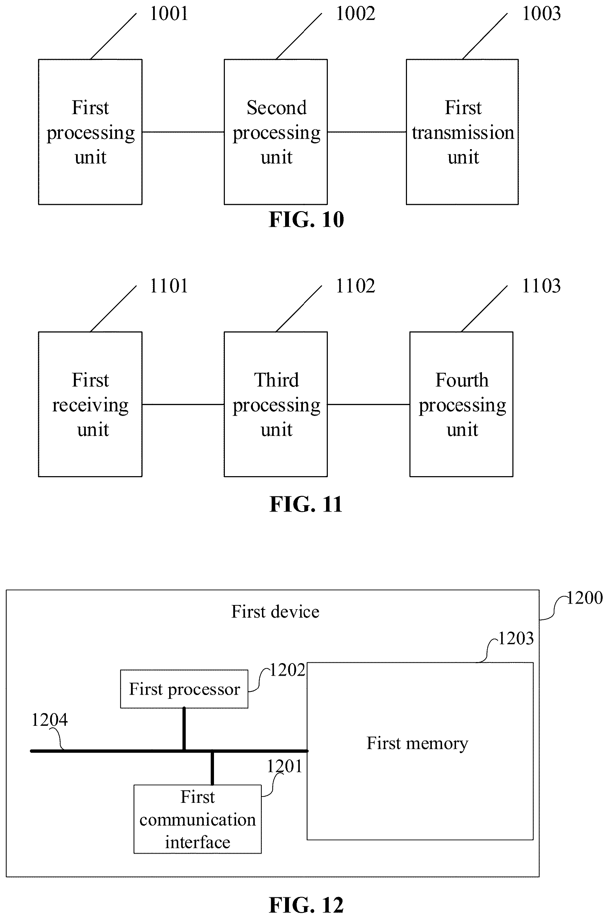

In order to implement the method of the first device side in the embodiment of the present disclosure, an embodiment of the present disclosure further provides an apparatus for signal transmission provided on a first device. As shown in FIG. 10, the apparatus includes: a first processing unit 1001, a second processing unit 1002, and a first transmission unit 1003.

The first processing unit 1001 is configured to obtain a first frame corresponding to a first signal, where the first signal includes an STM-N signal or an E1 signal, and the first frame includes an AU frame or a TUG frame or a TU frame.

The second processing unit 1002 is configured to map the first frame to a payload area of a second frame, where the second frame includes an fgODU frame.

The first transmission unit 1003 is configured to transmit the second frame.

In an embodiment, when the first signal includes the STM-N signal, the first frame includes an AU-4 frame or a TUG-3 frame or a TU-12 frame. Accordingly, the first processing unit 1001 is further configured to extract the first frame from the first signal.

In an embodiment, when the first signal includes the E1 signal, the first frame includes a TU-12 frame. Accordingly, the first processing unit 1001 is further configured to:
map the first signal to a third frame, where the third frame includes a VC-12 frame; and
map the third frame to the first frame.

In an embodiment, when mapping the first frame to the payload area of the second frame, the second processing unit 1002 is further configured to add first information into the first frame and map a first frame carrying the first information to the payload area of the second frame. The first information indicates a starting position of the first frame in the payload area of the second frame.

In practical application, the first processing unit 1001 and the second processing unit 1002 may be implemented by a processor in the apparatus for signal transmission. The first transmission unit 1003 may be implemented by a communication interface in the apparatus for signal transmission.

In order to implement the method of the second device side in the embodiment of the present disclosure, an embodiment of the present disclosure further provides an apparatus for signal transmission provided on a second device. As shown in FIG. 11, the apparatus includes a first receiving unit 1101, a third processing unit 1102, and a fourth processing unit 1103.

The first receiving unit 1101 is configured to receive a second frame, where the second frame includes an fgODU frame.

The third processing unit 1102 is configured to demap a first frame from a payload area of the second frame, where the first frame includes an AU frame or a TUG frame or a TU frame.

The fourth processing unit 1103 is configured to obtain a first signal corresponding to the first frame, where the first signal includes an STM-N signal or an E1 signal.

In an embodiment, when the first signal includes the STM-N signal, the first frame includes an AU-4 frame or a TUG-3 frame or a TU-12 frame. Accordingly, the fourth processing unit 1103 is further configured to:
extract a fourth frame from the first frame and perform clock synchronization to obtain a new first frame, where the fourth frame includes a VC-n frame; and
obtain a first signal corresponding to the new first frame.

In an embodiment, where the first signal includes an E1 signal, the first frame includes a TU-12 frame. Accordingly, the fourth processing unit 1103 is further configured to:
demap a third frame from the first frame, where the third frame includes a VC-12 frame; and
demap the first signal from the third frame.

In an embodiment, when demapping the first frame from the payload area of the second frame, the third processing unit 1102 is further configured to determine a starting position of the first frame in the payload area of the second frame using the first information carried in the first frame.

In practical application, the first receiving unit 1101 may be realized by a communication interface in the apparatus for signal transmission. The third processing unit 1102 and the fourth processing unit 1103 may be implemented by a processor in the apparatus for signal transmission.

It should be noted that, in the signal transmission apparatus provided in the above embodiment, when performing signal transmission, only the division of the above-described program modules is described as an example, and in practical application, the above-described processing may be allocated to different program modules as necessary, that is, the internal structure of the apparatus may be divided into different program modules to complete all or part of the above-described processing. In addition, the signal transmission apparatus provided by the above embodiment belongs to the same concept as the embodiment of the signal transmission method, and the specific implementation process thereof is detailed in the embodiment of the method, and will not be repeated herein.

Based on the hardware implementation of the program modules described above, and in order to implement the method of the first device side in the embodiment of the present disclosure, an embodiment of the present disclosure further provides a first device. As shown in FIG. 12, the first device 1200 includes: a first communication interface 1201, a first processor 1202, and a first memory 1203.

The first communication interface 1201 is capable of exchanging information with other devices (such as a second device, a client device, etc.).

The first processor 1202 is connected to the first communication interface 1201 to realize information interaction with other devices, and is configured to execute a method provided by one or more technical solutions on the first device side when running a computer program.

The first memory 1203 is configured to store the computer program.

In particular, the first processor 1202 is configured to:
obtain a first frame corresponding to a first signal, where the first signal includes a STM-N signal or an E1 signal, and the first frame includes an AU frame or a TUG frame or a TU frame;
map the first frame to a payload area of a second frame, where the second frame includes a fgODU frame; and
transmit the second frame through the first communication interface 1201.

In an embodiment, when the first signal includes the STM-N signal, the first frame includes an AU-4 frame or a TUG-3 frame or a TU-12 frame. Accordingly, the first processor 1202 is further configured to extract the first frame from the first signal.

In an embodiment, when the first signal includes an E1 signal, the first frame includes a TU-12 frame. Accordingly, the first processor 1202 is further configured to:
map the first signal to a third frame, where the third frame includes a VC-12 frame; and
map the third frame to the first frame.

In an embodiment, when mapping the first frame to the payload area of the second frame, the first processor 1202 is further configured to:
add first information into the first frame and map a first frame carrying the first information to the payload area of the second frame, where the first information indicates a starting position of the first frame in the payload area of the second frame.

It should be noted that the specific processing procedure of the first processor 1202 can be understood with reference to the above method, and will not be repeatedly described here.

Of course, in practical application, various components in the first device 1200 are coupled together through a bus system 1204. It will be appreciated that the bus system 1204 is used for connection and communication between these components. The bus system 1204 includes a power bus, a control bus, and a status signal bus in addition to a data bus. For clarity of illustration, however, various buses are designated as a bus system 1204 in FIG. 12.

The first memory 1203 in the embodiment of the present disclosure is used to store various types of data to support the operation of the first device 1200. Examples of such data include any computer program for operation on the first device 1200.

The method disclosed in the above-described embodiment of the present disclosure may be applied to or implemented by the first processor 1202. The first processor 1202 may be an integrated circuit chip having signal processing capabilities. In implementation, the steps of the above-described method may be completed by an integrated logic circuit of hardware in the first processor 1202 or instructions in the form of software. The first processor 1202 may be a general purpose processor, a digital signal processor (DSP), or another programmable logic device, a discrete gate or transistor logic device, a discrete hardware component, or the like. The first processor 1202 may implement or execute the methods, steps, and logic block diagrams disclosed in the embodiments of the present disclosure. The general purpose processor may be a microprocessor or any conventional processor or the like. The steps of the method disclosed in combination with the embodiments of the present disclosure may be directly embodied as execution by the hardware decoding processor, or execution by combination of hardware and software modules in the decoding processor. The software module may be located in a storage medium located in the first memory 1203, and the first processor 1202 reads the information from the first memory 1203, and completes the steps of the aforementioned method in combination with its hardware.

In an exemplary embodiment, the first device 1200 may be implemented by one or more application specific integrated circuits (ASICs), DSPs, programmable logic devices (PLDs), complex programmable logic devices (CPLDs), field-programmable gate arrays (FPGAs), general purpose processors, controllers, microcontrollers (MCUs), microprocessors, or other electronic components for performing the foregoing methods.

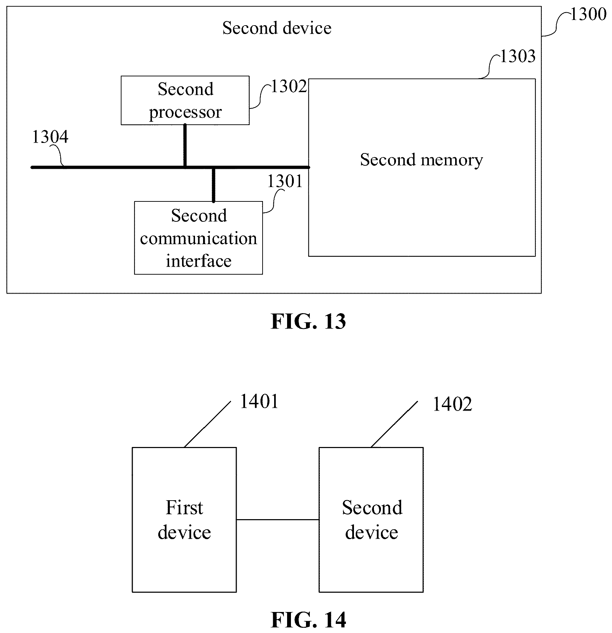

Based on the hardware implementation of the program module described above, and in order to implement the method of the second device side of the embodiment of the present disclosure, an embodiment of the present disclosure further provides a second device, As shown in FIG. 13, the second device 1300 includes: a second communication interface 1301, a second processor 1302, and a second memory 1303.

The second communication interface 1301 is capable of exchanging information with other devices (such as a first device, a client device, etc.).

The second processor 1302 is connected to the second communication interface 1301 to realize information interaction with other devices, and is configured to execute the method provided by one or more technical solutions on the second device side when running a computer program.

The second memory 1303 is configured to store the computer program.

In particular, the second processor 1302 is configured to:
receive a second frame through the second communication interface 1301, where the second frame includes a fgODU frame;
demap a first frame from a payload area of the second frame, where the first frame includes an AU frame or a TUG frame or a TU frame; and
obtain a first signal corresponding to the first frame, where the first signal includes an STM-N signal or an E1 signal.

In an embodiment, when the first signal includes the STM-N signal, the first frame includes an AU-4 frame or a TUG-3 frame or a TU-12 frame. Accordingly, the second processor 1302 is further configured to:
extract a fourth frame from the first frame and perform clock synchronization to obtain a new first frame, where the fourth frame includes a VC-n frame; and
obtain a first signal corresponding to the new first frame.

In an embodiment, when the first signal includes an E1 signal, the first frame includes a TU-12 frame. Accordingly, the second processor 1302 is further configured to:
demap a third frame from the first frame, where the third frame includes a VC-12 frame; and
demap the first signal from the third frame.

In an embodiment, when demapping the first frame from the payload area of the second frame, the second processor 1302 is further configured to determine a starting position of the first frame in the payload area of the second frame using the first information carried in the first frame.

It should be noted that the specific processing procedure of the second processor 1302 can be understood with reference to the above method, and will not be repeatedly described here.

Of course, in practical application, the various components in the second device 1300 are coupled together by a bus system 1304. It will be appreciated that the bus system 1304 is used for connection and communication between these components. The bus system 1304 includes a power bus, a control bus, and a status signal bus in addition to a data bus. But for clarity of illustration, the various buses are designated as a bus system 1304 in FIG. 13.

The second memory 1303 in the embodiment of the present disclosure is used to store various types of data to support the operation of the second device 1300. Examples of such data include any computer program for operation on the second device 1300.

The method disclosed in the above-described embodiment of the present disclosure may be applied to or implemented by the second processor 1302. The second processor 1302 may be an integrated circuit chip having signal processing capabilities. In implementation, the steps of the above-described method may be accomplished by an integrated logic circuit of hardware in the second processor 1302 or instructions in the form of software. The second processor 1302 may be a general-purpose processor, a DSP, or another programmable logic device, a discrete gate or transistor logic device, a discrete hardware component, or the like. The second processor 1302 may implement or execute the methods, steps, and logic block diagrams disclosed in the embodiments of the present disclosure. The general-purpose processor may be a microprocessor or any conventional processor or the like. The steps of the method disclosed in combination with the embodiments of the present disclosure can be directly embodied as execution by the hardware decoding processor, or execution by combination of hardware and software modules in the decoding processor. The software module may be located in a storage medium located in the second memory 1303, and the second processor 1302 reads the information from the second memory 1303, and completes the steps of the aforementioned method in combination with its hardware.

In an exemplary embodiment, the second device 1300 may be implemented by one or more ASICs, DSPs, PLDs, CPLDs, FPGAs, general purpose processors, controllers, MCUs, Microprocessors, or other electronic components for performing the aforementioned methods.

It can be understood that the memory (the first memory 1203 and the second memory 1303) of the embodiment of the present disclosure may be a volatile memory or a non-volatile memory, or may include both volatile and non-volatile memory. The non-volatile memory may be a read-only memory (ROM), a programmable read-only memory (PROM), an erasable programmable read-only memory (EPROM), an electrically erasable programmable read-only memory (EEPROM), a ferromagnetic random access memory (FRAM), a flash memory (Flash Memory), a magnetic surface memory, an optical disc, or a compact disc read-only memory (CD-ROM). The magnetic surface memory may be a magnetic disk memory or a magnetic tape memory. The volatile memory may be a random access memory (RAM), which serves as an external cache. By way of illustration, but not limitation, many forms of RAM are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRAM), an enhanced synchronous dynamic random access memory (ESDRAM), a synchronous link dynamic random access memory (SLDRAM), a direct rambus random access memory (DRRAM). The memory described in the embodiments of the present disclosure is intended to include, but is not limited to, these and any other suitable type of memory.

In order to implement the method provided by the embodiment of the present disclosure, an embodiment of the present disclosure further provides a signal transmission system, and as shown in FIG. 14, the system includes a first device 1401 and a second device 1402.

It should be noted that the specific processing procedures of the first device 1401 and the second device 1402 have been described in detail above, and will not be repeatedly described here.

In an exemplary embodiment, an embodiment of the present disclosure further provides a storage medium, that is, a computer storage medium, specifically a computer-readable storage medium, for example, including a first memory 1203 storing a computer program, and the computer program can be executed by the first processor 1202 of the first device 1200 to complete the steps of the method described at the first device side. Another example is the second memory 1303 storing a computer program executable by the second processor 1302 of the second device 1300 to complete the steps of the second device-side method. The computer-readable storage medium may be a memory such as a FRAM, a ROM, a PROM, an EPROM, an EEPROM, a Flash Memory, a magnetic surface memory, an optical disc, or a CD-ROM.

It should be noted that "first", "second", and the like are used to distinguish similar objects, and are not necessarily used to describe a specific order or sequence.

In addition, the solutions described in the embodiments of the present disclosure may be arbitrarily combined as long as there is no conflict.

The above description is merely a preferred embodiment of the present disclosure, and is not intended to limit the scope of protection of the present disclosure.

## Claims

1. A method for signal transmission, comprising:
obtaining a first frame corresponding to a first signal, wherein the first signal comprises a synchronous transport module (STM)-N signal or an El signal, and the first frame comprises an administration unit (AU) frame or a tributary unit group (TUG) frame or a tributary unit (TU) frame;
mapping the first frame to a payload area of a second frame, wherein the second frame comprises a fine grain optical data unit (fgODU) frame; and
transmitting the second frame.

2. The method of claim 1, wherein when the first signal comprises the STM-N signal, the first frame comprises an AU-4 frame or a TUG-3 frame or a TU-12 frame; and
wherein obtaining the first frame corresponding to the first signal comprises:
extracting the first frame from the first signal.

3. The method of claim 2, wherein when mapping the first frame to the payload area of the second frame, at least one of the following applies:
one first frame corresponds to one second frame; or
a plurality of first frames correspond to one second frame.

4. The method of claim 1, wherein when the first signal comprises the E1 signal, the first frame comprises a TU-12 frame; and
wherein obtaining the first frame corresponding to the first signal comprises:
mapping the first signal to a third frame, wherein the third frame comprises a virtual container (VC)-12 frame; and
mapping the third frame to the first frame.

5. The method of any one of claims 1 to 4, wherein the second frame comprises a first pointer indicating a starting position of the first frame in the payload area of the second frame.

6. The method of claim 5, wherein at least one of the following applies:
the first pointer is disposed in a first overhead area of the second frame; or
the first pointer is disposed in a second overhead area of the second frame.

7. The method of any one of claims 1 to 4, wherein when mapping the first frame to the payload area of the second frame, the method further comprises:
adding first information into the first frame; and
mapping a first frame carrying the first information to the payload area of the second frame,
wherein the first information indicates a starting position of the first frame in the payload area of the second frame.

8. A method for signal transmission, comprising:
receiving a second frame, wherein the second frame comprises a fine grain optical data unit (fgODU) frame;
demapping a first frame from a payload area of the second frame, wherein the first frame comprises an administration unit (AU) frame or a tributary unit group (TUG) frame or a tributary unit (TU) frame; and
obtaining a first signal corresponding to the first frame, wherein the first signal comprises a synchronous transport module (STM)-N signal or an E1 signal.

9. The method of claim 8, wherein when the first signal comprises the STM-N signal, the first frame comprises an AU-4 frame or a TUG-3 frame or a TU-12 frame; and
wherein obtaining the first signal corresponding to the first frame comprises:
extracting a fourth frame from the first frame and performing clock synchronization, to obtain a new first frame, wherein the fourth frame comprises a virtual container (VC)-n frame; and
obtaining a first signal corresponding to the new first frame.

10. The method of claim 9, wherein when demapping the first frame from the payload area of the second frame, at least one of the following applies:
one second frame corresponds to one first frame; or
one second frame corresponds to a plurality of first frames.

11. The method of claim 8, wherein when the first signal comprises the E1 signal, the first frame comprises a TU-12 frame; and
wherein obtaining the first signal corresponding to the first frame comprises:
demapping a third frame from the first frame, wherein the third frame comprises a VC-12 frame; and
demapping the first signal from the third frame.

12. The method of any one of claims 8 to 11, wherein the second frame comprises a first pointer indicating a starting position of the first frame in the payload area of the second frame.

13. The method of claim 12, wherein at least one of the following applies:
the first pointer is disposed in a first overhead area of the second frame; or
the first pointer is disposed in a second overhead area of the second frame.

14. The method of any one of claims 8 to 11, wherein when demapping the first frame from the payload area of the second frame, the method further comprises:
determining, using first information carried in the first frame, a starting position of the first frame in the payload area of the second frame.

15. An apparatus for signal transmission, comprising:
a first processing unit, configured to obtain a first frame corresponding to a first signal, wherein the first signal comprises a synchronous transport module (STM)-N signal or an E1 signal, and the first frame comprises an administration unit (AU) frame or a tributary unit group (TUG) frame or a tributary unit (TU) frame;
a second processing unit, configured to map the first frame to a payload area of a second frame, wherein the second frame comprises a fine grain optical data unit (fgODU) frame; and
a first transmission unit, configured to transmit the second frame.

16. An apparatus for signal transmission, comprising:
a first receiving unit, configured to receive a second frame, wherein the second frame comprises a fine grain optical data unit (fgODU) frame;
a third processing unit, configured to demap a first frame from a payload area of the second frame, wherein the first frame comprises an administration unit (AU) frame or a tributary unit group (TUG) frame or a tributary unit (TU) frame; and
a fourth processing unit, configured to obtain a first signal corresponding to the first frame, wherein the first signal comprises a synchronous transport module (STM)-N signal or an E1 signal.

17. A first device, comprising:
a first communication interface; and
a first processor,
wherein the first processor is configured to:
obtain a first frame corresponding to a first signal, wherein the first signal comprises a synchronous transport module (STM)-N signal or an E1 signal, and the first frame comprises an administration unit (AU) frame or a tributary unit group (TUG) frame or a tributary unit (TU) frame;
map the first frame to a payload area of a second frame, wherein the second frame comprises a fine grain optical data unit (fgODU) frame; and
transmit the second frame through the first communication interface.

18. A second device, comprising:
a second communication interface; and
a second processor,
wherein the second processor is configured to:
receive a second frame through the second communication interface, wherein the second frame comprises a fine grain optical data unit (fgODU) frame;
demap a first frame from a payload area of the second frame, wherein the first frame comprises an administration unit (AU) frame or a tributary unit group (TUG) frame or a tributary unit (TU) frame; and
obtain a first signal corresponding to the first frame, wherein the first signal comprises a synchronous transport module (STM)-N signal or an E1 signal.

19. A first device, comprising:
a first processor; and
a first memory configured to store a computer program executable by the first processor,
wherein the first processor is configured to execute the method of any one of claims 1 to 7 when running the computer program.

20. A second device, comprising:
a second processor; and
a second memory configured to store a computer program executable by the second processor,
wherein the second processor is configured to execute the method of any one of claims 8 to 14 when running the computer program.

21. A storage medium having stored thereon a computer program which, when executed by a processor, implements the method of any one of claims 1 to 7 or the method of any one of claims 8 to 14.
